# EUROPÄISCHE PATENTANMELDUNG

(11) **EP 2 221 135 A2**
(43) Veröffentlichungstag der Anmeldung: **25.08.2010**
(21) Anmeldenummer: 10152733.1
(22) Anmeldetag: 05.02.2010
(51) Int. Cl.: B23H 11/00, B25B 5/00

(54) **Schnellwechselbolzen**

(30) Priorität: 18.02.2009 DE 102009000974
(71) Anmelder: Robert Bosch GmbH, 70442 Stuttgart (DE)
(72) Erfinder: Ziegler, Christian, 66557, Illingen (DE)

(57) **Zusammenfassung**

Die vorliegende Erfindung betrifft einen Schnellwechselbolzen zur Fixierung eines ersten Elements (20) an einem zweiten Element (22), umfassend einen Kopf (2), einen Hohlzylinder (3) mit mehreren seitlichen Öffnungen (11), ein Druckelement (4), welches im Hohlzylinder (3) angeordnet ist, wobei das Druckelement ein Vorspannelement (5) zur Vorspannung umfasst, eine zentrale Kugel (8), welche im Inneren des Hohlzylinders (3) angeordnet ist und an einem ersten Ende des Druckelements (4) angeordnet ist, mehrere seitliche Kugeln (9), welche in den seitlichen Öffnungen (11) des Hohlzylinders (3) angeordnet sind, und einen schwenkbar angeordneten Hebel (15), welcher am Kopf (2) schwenkbar gehalten ist und einen Exzenterbereich (16) aufweist, wobei der Exzenterbereich (16) mit einem zweiten Ende des Druckelements (4) in Kontakt ist, um das Druckelement (4) bei einem Schwenken des Hebels (15) zu bewegen.

## Beschreibung

### Stand der Technik

Die vorliegende Erfindung betrifft einen Schnellwechselbolzen zur Fixierung eines ersten Elements an einem zweiten Element.

Beispielsweise bei ECM-Maschinen werden zur Reduktion eines Stillstands der Maschine komplett vorbereitete Wechseleinheiten verwendet. Derartige Wechseleinheiten sind jeweils für verschiedene Bauteile vorgesehen. Derartige Wechseleinheiten werden an einem separaten Rüstplatz vorbereitet. Um einen sicheren Rüstvorgang sicherzustellen, werden die Wechseleinheiten auf beispielsweise einer Unterplatte mittels Schraubbolzen fixiert. Hierzu ist ein Werkzeug, z.B. ein Schlüssel oder ein Sechskant-Werkzeug notwendig. Dadurch dauert es relativ lange, bis die Wechseleinheit an der richtigen Stelle positioniert ist. Ferner kann durch die Verwendung eines Werkzeugs nicht immer ein gleichmäßiges Anzugsmoment für die Vielzahl der Schraubbolzen sichergestellt werden.

### Vorteile der Erfindung

Der erfindungsgemäße Schnellwechselbolzen mit den Merkmalen des Anspruchs 1 weist demgegenüber den Vorteil auf, dass er eine einfache und schnelle Fixierung eines ersten Elements an einem zweiten Element ermöglicht, ohne dass dabei ein spezielles Werkzeug notwendig ist. Der erfindungsgemäße Schnellwechselbolzen weist einen Hebel auf, welcher von Hand betätigbar ist. Ferner stellt der erfindungsgemäße Schnellwechselbolzen sicher, dass eine Fixierung immer mit einer gleichen Haltekraft erfolgt. Hierdurch können insbesondre Bestätigungen durch eine zu große Kraftausübung vermieden werden. Dies wird erfindungsgemäß dadurch erreicht, dass der Schnellwechselbolzen einen Kopf, einen Hohlzylinder mit mehreren seitlichen Öffnungen und ein Druckelement umfasst. Das Druckelement ist im Hohlzylinder angeordnet und mittels eines Vorspannelements, insbesondere einer Feder, vorgespannt. Ferner umfasst der Schnellwechselbolzen eine zentrale Kugel, welche im Inneren des Hohlzylinders an einem ersten Ende des Druckelements angeordnet ist und mehrere seitliche Kugeln, welche in den seitlichen Öffnungen des Hohlzylinders angeordnet sind. Durch Schwenken des Hebels, welcher am Kopf des Schnellwechselbolzens schwenkbar fixiert ist und welcher einen Exzenterbereich aufweist, wird über den Exzenterbereich das Druckelement derart bewegt, dass die zentrale Kugel gegen die seitlichen Kugeln drückt und die seitlichen Kugeln aus den seitlichen Öffnungen des Hohlzylinders vorstehen. Hierdurch wird eine Fixierung des Schnellwechselbolzens in einer Bohrung erreicht.

Die Unteransprüche zeigen bevorzugte Weiterbildungen der Erfindung.

Vorzugsweise ist an einem zum Hebel gerichteten Ende des Hohlzylinders eine Innenhülse mit einem Außengewinde angeordnet und der Kopf ist als Außenhülse mit einem Innengewinde ausgebildet. Dabei sind das Außengewinde und das Innengewinde miteinander im Eingriff, um eine Relativposition zwischen dem Kopf und dem Hohlzylinder zu ändern. Hierdurch kann ein einstellbarer Schnellwechselbolzen erhalten werden, welcher für verschiedene Befestigungsaufgaben durch Änderung der Relativposition zwischen Kopf und Hohlzylinder angepasst werden kann.

Besonders bevorzugt umfasst der Schnellwechselbolzen eine Arretiervorrichtung, um eine eingestellte Relativposition zwischen dem Kopf und dem Hohlzylinder zu arretieren. Hierdurch kann verhindert werden, dass aus Versehen beim Einsetzen oder Entnehmen des Schnellwechselbolzens die Relativposition verändert wird.

Weiter bevorzugt ist die zentrale Kugel verliersicher am ersten Ende des Druckelements angeordnet. Hierdurch kann einerseits eine einfache Montage des Schnellwechselbolzens erreicht werden und andererseits wird eine sichere Verbindung zwischen dem Druckelement und der zentralen Kugel bereitgestellt.

Gemäß einer weiteren bevorzugten Ausgestaltung der Erfindung ist an der Innenseite des Hohlzylinders ein Absatz ausgebildet, um das Vorspannelement daran abzustützen. Hierdurch weist der Schnellwechselbolzen einen besonders kompakten Aufbau auf.

Weiter bevorzugt umfasst das Druckelement neben dem Vorspannelement einen Kolben und einen am Kolben befestigten Stift. Der Stift befindet sich dabei mit der zentralen Kugeln in Kontakt und der Kolben ist mit dem Exzenter des Hebels in Kontakt. Eine Verbindung zwischen dem Kolben und dem Stift kann dabei beispielsweise mittels einer Presspassung und/oder Kleben und/oder Schweißen oder einer anderen Verbindungstechnik erreicht werden.

Weiter bevorzugt sind genau zwei seitliche Kugeln oder genau drei seitliche Kugeln und eine entsprechende Anzahl von seitlichen Öffnungen im Hohlzylinder vorgesehen. Insbesondere bei der Verwendung von drei seitlichen Kugeln kann eine einfache Zentrierung des Schnellwechselbolzens in einer Bohrung erreicht werden.

Der erfindungsgemäße Schnellwechselbolzen wird vorzugsweise in einer Rüstvorrichtung verwendet, insbesondere für ECM-Maschinen. Der erfindungsgemäße Schnellwechselbolzen fixiert dabei einer Oberplatte, auf welcher der Rüstvorgang stattfindet, an einer Unterplatte, wobei in der Oberplatte eine Stufenbohrung und in der Unterplatte eine zylindrische Bohrung, vorzugsweise mit einer Ringnut zur Aufnahme der seitlichen Kugeln, vorgesehen ist.

### Zeichnung

Nachfolgend wird ein bevorzugtes Ausführungsbeispiel der Erfindung unter Bezugnahme auf die begleitende Zeichnung im Detail beschrieben. In der Zeichnung ist:

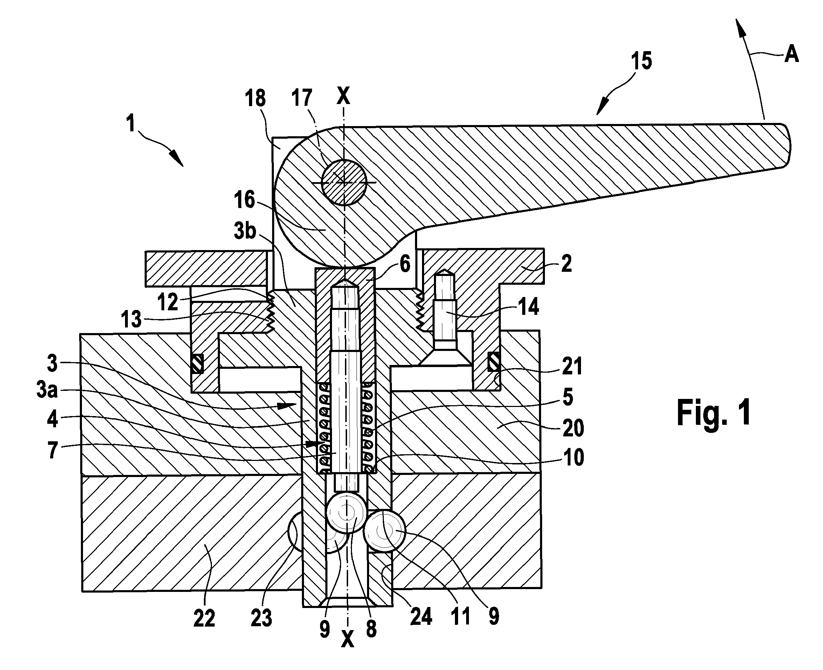

- Figur 1: eine schematische Schnittansicht eines Schnellwechselbolzens gemäß einem bevorzugten Ausführungsbeispiel der Erfindung.

### Bevorzugte Ausführungsform der Erfindung

Nachfolgend wird unter Bezugnahme auf Fig. 1 ein Schnellwechselbolzen 1 gemäß einem bevorzugten Ausführungsbeispiel der Erfindung im Detail beschrieben.

Wie aus Fig. 1 ersichtlich ist, umfasst der Schnellwechselbolzen 1 einen Kopf 2 sowie einen Hohlzylinder 3. Ferner umfasst der Schnellwechselbolzen 1 ein Druckelement 4 und einen Hebel 15. Der Hohlzylinder 3 weist einen Zylinderbereich 3a und einen Kopfbereich 3b auf. Am Kopfbereich 3b ist ein Außengewinde 13 vorgesehen. Weiterhin ist am Kopf 2 ein Innengewinde 12 und ein Haltebereich 18 vorgesehen. Am Haltebereich 18 ist ein Hebel 15 schwenkbar um eine Schwenkachse 17 gelagert. Der Haltebereich 18 umfasst zwei zur Außenseite vorstehende Schenkel, zwischen denen der Hebel 15 schwenkbar gelagert ist. Am Hebel 15 ist ferner ein Exzenterbereich 16 ausgebildet, welcher sich mit einem Ende des Druckelements 4 in Kontakt befindet.

Das Druckelement 4 umfasst ein Federelement 5, einen Kolben 6 und einen Stift 7. Der Stift 7 ist dabei in einem Hohlraum im Kolben 6 befestigt. Das Federelement 4 umgibt den Außenumfang des Stiftes 7 und stützt sich mit einem Ende an einem Randbereich des Kolbens 6 und mit einem anderen Ende an einem Absatz 10 an der Innenseite des Zylinderbereichs 3a ab.

Ferner umfasst der Schnellwechselbolzen 1 eine zentrale Kugel 8 sowie mehrere seitliche Kugeln 9. In diesem Ausführungsbeispiel sind insgesamt drei seitliche Kugeln 9 vorgesehen. Die zentrale Kugel 8 ist dabei im Inneren des Hohlzylinders 3 derart angeordnet, dass sie sich mit dem freien Ende des Stifts 7 in Kontakt befindet. Die zentrale Kugel 8 ist zentrisch zu den seitlichen Kugeln 9 angeordnet und befindet sich ebenfalls mit den seitlichen Kugeln 9 in Kontakt. Im Hohlzylinder 3, genauer im Zylinderbereich 3a des Hohlzylinders 3, sind mehrere Öffnungen 11 ausgebildet, in denen jeweils eine der seitlichen Kugeln 9 angeordnet ist. Die seitlichen Kugeln 9 können sich dabei in Radialrichtung zum Hohlzylinder 3 in den Öffnungen bewegen. Die zentrale Kugel 8 und die seitlichen Kugeln 9 weisen, wie aus Fig. 1 ersichtlich ist, dabei die gleichen Größen auf.

Weiterhin ist eine Arretiervorrichtung 14 in Form eines Schraubbolzens vorgesehen, welche eine festere Verbindung zwischen dem Kopf 2 und dem Kopfbereich 3b des Hohlzylinders 3 herstellt. Wenn die Arretiervorrichtung 14 nicht eingeschraubt ist, kann eine Relativposition zwischen dem Kopf 2 und dem Hohlzylinder 3 über die Gewindeverbindung verändert werden. Mit anderen Worten kann der Hohlzylinder 3 weiter in den Kopf 2 eingeschraubt werden oder weiter aus dem Kopf 2 herausgeschraubt werden und dadurch für verschiedene Einsatzzwecke verwendet werden.

Fig. 1 zeigt den Schnellwechselbolzen 1 gemäß der vorliegenden Erfindung in einem eingebauten Zustand. Hierbei fixiert der Schnellwechselbolzen 1 ein erstes Element 20, wie beispielsweise eine Oberplatte, auf der ein Rüstvorgang erfolgen soll, an einem zweiten Element 22 in Form einer Unterplatte. Im ersten Element 20 ist dabei eine Stufenbohrung 21 gebildet und im zweiten Element 22 ist eine Bohrung 24 gebildet. Ferner ist in der Bohrung 24 eine umlaufende Ringnut 23 vorgesehen. Wie aus Fig. 1 ersichtlich ist, dient die Ringnut 23 zur Aufnahme der im Fixierzustand des Schnellwechselbolzens 1 nach außen gedrückten seitlichen Kugeln 9. Fig. 1 zeigt dabei den Fixierzustand, d.h. wenn der Schnellwechselbolzen 1 das erste Element 20 mit dem zweiten Element 22 verbindet.

Die Stufenbohrung 21 ist dabei entsprechend den Außenabmessungen des Kopfes 2 bzw. des Hohlzylinders 3 so gebildet, dass der Schnellwechselbolzen 1 mit leichtem Druck in die Stufenbohrung 21 einsetzbar ist. Ein Durchmesser der Bohrung 24 ist ebenfalls derart gewählt, dass der Schnellwechselbolzen 1, insbesondere der Hohlzylinder 3 mit leichtem Druck in die Bohrung 24 einsetzbar ist. Während des Einsetzvorgangs befindet sich der Hebel 15 in einer vertikalen Position in Verlängerung einer Längsachse X-X des Schnellwechselbolzens. In Fig. 1 deutet der Pfeil A den Öffnungsvorgang des Hebels 15 von der geschlossenen horizontalen Position in die vertikale Position an. Durch den Schwenkvorgang des Hebels 15 kommt dabei der Exzenter 16 immer weniger mit dem Druckelement 4 in Kontakt. Das Federelement 5, welches eine ständige Vorspannung auf das Druckelement 4 in Richtung des Hebels 15 ausübt, drückt dabei das Druckelement 4 ständig in Richtung des Hebels 15, so dass bei einem Schwenken des Hebels 15 in die Öffnungsstellung das Druckelement 4 entsprechend der Freigabe durch den Exzenter 16 in Richtung der Schwenkachse 17 gedrückt wird. Hierdurch wird der Druck auf die zentrale Kugel 8 freigegeben, so dass sich die zentrale Kugel 8 sowie auch die seitlichen Kugeln 9 wieder bewegen können. Da die seitlichen Kugeln 9 nur teilweise in die Ringnut 23 eingreifen, kann der Schnellwechselbolzen 1 bei geöffnetem Hebel 15 einfach aus dem ersten und zweiten Element 20, 22 herausgezogen werden.

Erfindungsgemäß wird somit ein Schnellwechselbolzen 1 bereitgestellt, welcher ohne ein zusätzliches Werkzeug nur mittels Hand eine Verbindung von zwei Elementen 20, 22 ermöglicht. Durch das Vorsehen des Exzenters 16 ist dabei eine Schließkraft auf das Druckelement 5 immer gleich. Somit kann insbesondere sichergestellt werden, dass auch bei unterschiedlichen Anwendern immer eine gleiche Haltekraft auf das Druckelement 4 und dadurch auf die zentrale Kugel 8 und die seitlichen Kugeln 9 ausgeübt wird.

Weiterhin ist der erfindungsgemäße Schnellwechselbolzen 1 derart aufgebaut, dass er auch im bloßen Zustand, d.h. wenn er nicht verwendet wird, keine freien Teile aufweist, welche verloren gehen könnten. Ein Herausfallen der seitlichen Kugeln 9 aus den Öffnungen 11 wird dabei derart verhindert, dass ein äußerer Durchmesser der Öffnungen 11 etwas kleiner ist als ein maximaler Durchmesser der seitlichen Kugeln 9. Ferner kann durch die Möglichkeit einer Relativbewegung über das Gewinde zwischen dem Kopf 2 und dem Kopfbereich 3b des Hohlzylinders 3 eine Einstellung des Schnellwechselbolzens 1 an verschiedene erste und zweite Elemente realisiert werden. Hierdurch kann eine Anpassung des Schnellwechselbolzens in gewissem Umfang an verschiedene Einsatzmöglichkeiten ermöglicht werden. Ferner stellt die zentrale Kugel 8 sicher, dass eine gleichmäßige Kraftverteilung auf die seitlichen Kugeln 9 erfolgt. Hierbei ist nur ein geringes Spiel bzw. kein Spiel zwischen der Innenseite des Hohlzylinders 3 und der zentralen Kugel 8 vorgesehen.

Weiterhin ist der erfindungsgemäße Schnellwechselbolzen 1 sehr einfach und kompakt aufgebaut.

## Patentansprüche

1. Schnellwechselbolzen zur Fixierung eines ersten Elements (20) an einem zweiten Element (22), umfassend
- einen Kopf (2),
- einen Hohlzylinder (3) mit mehreren seitlichen Öffnungen (11),
- ein Druckelement (4), welches im Hohlzylinder (3) angeordnet ist, wobei das Druckelement ein Vorspannelement (5) zur Vorspannung umfasst,
- eine zentrale Kugel (8), welche im Inneren des Hohlzylinders (3) angeordnet ist und an einem ersten Ende des Druckelements (4) angeordnet ist,
- mehrere seitliche Kugeln (9), welche in den seitlichen Öffnungen (11) des Hohlzylinders (3) angeordnet sind, und
- einen schwenkbar angeordneten Hebel (15), welcher am Kopf (2) schwenkbar gehalten ist und einen Exzenterbereich (16) aufweist, wobei der Exzenterbereich (16) mit einem zweiten Ende des Druckelements (4) in Kontakt ist, um das Druckelement (4) bei einem Schwenken des Hebels (15) zu bewegen.

2. Schnellwechselbolzen nach Anspruch 1, **dadurch gekennzeichnet, dass** der Hohlzylinder (3) an einem zum Hebel (15) gerichteten Ende einen Kopfbereich (3d) mit einem Außengewinde (13) aufweist und der Kopf (2) eine Ausnehmung mit einem Innengewinde (12) aufweist und das Außengewinde (13) mit dem Innengewinde (12) im Eingriff ist, um eine Relativposition zwischen dem Kopf (2) und den Hohlzylindern (3) zu ändern.

3. Schnellwechselbolzen nach Anspruch 2, ferner umfassend eine Arretiervorrichtung (14), insbesondere eine Schraubbolzen, um eine Relativposition zwischen dem Kopf (2) und dem Hohlzylinder (3) zu arretieren.

4. Schnellwechselbolzen nach einem der vorhergehenden Ansprüche, **dadurch gekennzeichnet, dass** die zentrale Kugel (8) verliersicher am ersten Ende des Druckelements (4) angeordnet ist.

5. Schnellwechselbolzen nach einem der vorhergehenden Ansprüche, **dadurch gekennzeichnet, dass** an der Innenseite des Hohlzylinders (3) ein Absatz (10) ausgebildet ist, um das Vorspannelement (5) abzustützen.

6. Schnellwechselbolzen nach einem der vorhergehenden Ansprüche, **dadurch gekennzeichnet, dass** das Druckelement (4) einen Kolben (6) mit einem am Kolben (6) befestigten Stift (7) aufweist.

7. Schnellwechselbolzen nach einem der vorhergehenden Ansprüche, **gekennzeichnet durch** genau zwei oder genau drei seitliche Kugeln (9) und eine entsprechende Anzahl von Öffnungen (11) im Hohlzylinder (3).

8. Rüstvorrichtung, umfassend einen Schnellwechselbolzen nach einem der vorhergehenden Ansprüche.
